Europäisches Patentamt

European Patent Office

Office européen des brevets

(19)

(11) Veröffentlichungsnummer: **0 400 538**
**A2**

(12) **EUROPÄISCHE PATENTANMELDUNG**

(21) Anmeldenummer: **90110085.9**

(22) Anmeldetag: **28.05.90**

(51) Int. Cl.5: **G07C 9/02**

(30) Priorität: **30.05.89 DE 8906634 U**

(43) Veröffentlichungstag der Anmeldung:
**05.12.90 Patentblatt 90/49**

(84) Benannte Vertragsstaaten:
**AT BE CH DE ES FR GB IT LI NL SE**

(71) Anmelder: **Siemens Aktiengesellschaft**
**Wittelsbacherplatz 2**
**D-8000 München 2(DE)**

(72) Erfinder: **Kruse, Dietrich, Dipl.-Ing.**
**Ulmenstrasse 9**
**D-8012 Ottobrunn(DE)**

(54) **Lesevorrichtung für Chipkarten.**

(57) Die Lesevorrichtung mit einer wenigstens eine Einstecköffnung für die Chipkarte (CK) aufweisenden sowie mit einem bidirektionalen Antrieb und einer Kontaktvorrichtung (K) ausgestatteten Lesestation (LS) ist in der Weise ausgebildet, daß vor der Einstecköffnung und an der der Einstecköffnung gegenüberliegenden ebenfalls eine Öffnung aufweisenden Seite der Lesestation je ein Einschleuß- und/oder Ausschleuß-Transportkanal (TK1, TK2) vorgesehen ist, der jeweils einen vom Antrieb der Lesestation unabhängigen bidirektionalen Antrieb mit paarweise angeordneten Transportbändern (B1, B2) aufweist. Ferner sind innerhalb der Lesestation im Bereich der beiden Öffnungen jeweils steuerbare Sperrklinken (A1, A2) vorgesehen, die die jeweils von der gegenüberliegenden Öffnung zugeführte Chipkarte (CK) in der Lese-/Schreibposition fixieren.

## Lesevorrichtung für Chipkarten

Die Erfindung betrifft eine Lesevorrichtung für Chipkarten gemäß den Merkmalen des Oberbegriffs des Anspruchs 1.

Neben der seit langem bekannten Magnetstreifenkarte spielt die Chipkarte eine zunehmend größere Rolle, insbesondere deshalb, weil sie gegenüber der passiven Magnetspeicherkarte hinsichtlich Intelligenz, Aktivität, Datensicherheit und Multifunktionalität erhebliche Vorteile bietet. Seide Kartentypen unterscheiden sich darüber hinaus auch hinsichtlich der Betriebsweise. Während bei der Magnetstreifenkarte eine Relativbewegung zwischen der Karte und dem Schreib-/Lesekopf zwingend notwendig ist, verlangt die Chipkarte das genaue Gegenteil, d.h. keinerlei Relativbewegung zwischen den Kontaktpunkten des integrierten Schaltkreises und der Kontaktanordnung der Leseeinrichtung.

Die bei Magnetstreifenkarten notwendige Relativbewegung hat indessen den Vorteil, daß diese Bewegung auch von Hand, d.h. ohne mechanische Antriebsmittel, durchgeführt werden kann, eine Maßnahme, die bei den sog. Durchzugslesern mit Vorteil praktiziert wird. Diese Durchzugsleser haben sich insbesondere bei Personendurchlaßsystemen, insbesondere in Verbindung mit Drehkreuzen, Drehtüren oder dgl. mit gutem Erfolg bewährt, weil die Karte praktisch im Vorbeigehen, d.h. während der Laufbewegung des Benutzers, so ganz nebenbei gelesen werden kann.

Es wäre deshalb an sich wünschenswert, die Vorteile des Durchzugsverfahrens auch in Verbindung mit der Chipkarte zu nutzen, wenngleich die Chipkarte bekannter Art an sich dafür nicht geeignet erscheint, weil beim Kontaktier-und Lesevorgang wenigstens für kurze Zeit ein Stillstand der Karte zwingend notwendig ist.

Der vorliegenden Erfindung liegt nun die Aufgabe zugrunde, eine Lesevorrichtung für Chipkarten so auszubilden, daß sie in einer dem Durchzugsleseprinzip analogen Weise betrieben werden kann.

Die Lösung dieser Aufgabe ergibt sich, ausgehend von einer Leseeinrichtung der eingangs genannten Art, durch die kennzeichnenden Merkmale des Anspruchs 1. Vorteilhafte Ausgestaltungen der Erfindung sind in Unteransprüchen angegeben.

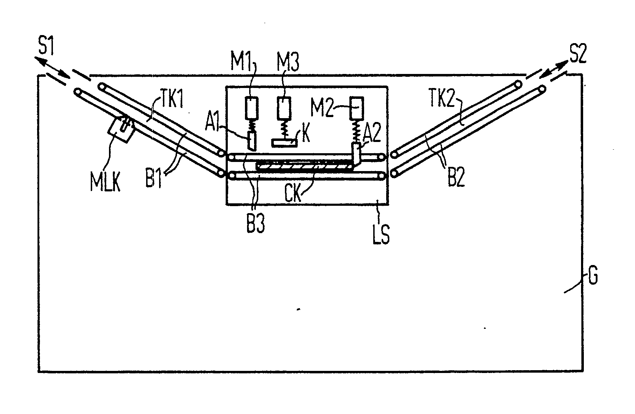

Ein Ausführungsbeispiel der Erfindung wird im folgenden anhand der Zeichnung näher erläutert.

Die Figur zeigt in einer schematischen Darstellung das Prinzip einer Lesevorrichtung für Chipkarten. Diese in einem Gehäuse G untergebrachte Lesevorrichtung besteht im einzelnen aus einer Lesestation LS und zwei an gegenüberliegenden Enden der Lesestation LS aus dem Gehäuse G herausführenden Einschleuß- und/oder Ausschleuß-Transportkanälen TK1, TK2. Sowohl die Lesestation LS als auch die Transportkanäle TK1, TK2 weisen separate Antriebssysteme auf, die jeweils aus paarweise angeordneten, die Chipkarte CK zwischen sich einschließenden Transportbändern B3, B1, B2 bestehen. Die jeweils bidirektionalen Antriebssysteme sind unabhängig voneinander ansteuerbar, so daß eine Benutzung von beiden Seiten her möglich ist.

Im folgenden wird die Betriebsweise der Lesevorrichtung am Beispiel einer über den Einsteckschlitz S1 zugeführten Chipkarte CK näher erläutert. Beim Einstecken der Chipkarte werden die Transportbänder B1 derart angesteuert, daß sie die Chipkarte CK in den Transportkanal TK1 hineinziehen und an die ebenfalls gestarteten Transportbänder B3 der Lesestation LS übergeben. Eine, bezogen auf die Einschubrichtung, am hinteren Ende der Lesestation LS vorgesehene und durch einen Hubmagneten M2 gesteuerte Sperrklinke A2 läßt die Chipkarte CK definiert anhalten. Nun werden die Transportbänder B3, B1 abgeschaltet und die Kontaktvorrichtung K der Lesestation mit Hilfe des Hubmagneten M3 auf die Kontaktfläche der Chipkarte CK abgesenkt. Sobald der Lese-und/oder Schreibvorgang abgeschlossen ist, wird die Kontaktvorrichtung K mit Hilfe des Hubmagneten M3 wieder angehoben. Durch die ebenfalls angehobene Sperrklinke A2 wird die Chipkarte CK freigegeben, so daß sie, angetrieben durch die Transportbänder B3 und B2, durch den Transportkanal TK2 zum Ausgabeschlitz S2 transportiert werden kann. Der Weitertransport der Karte aus der Lesestation kann im Zusammenhang mit Zugangssperren vorteilhaft z.B. davon abhängig gemacht werden, ob ein Drehkreuz, eine Drehtür oder dgl. weitergedreht ist bzw. ob eine Person die Sperre passiert hat.

Die soeben beschriebene Betriebsweise kann, da die Transportbänder B1, B2, B3 bidirektional bewegbar sind, auch in umgekehrter Richtung stattfinden. Anstelle der Sperrklinke A2 tritt dann die am anderen Ende der Lesestation LS vorgesehene Sperrklinke A1 mit Hilfe des Hubmagneten M1 in Funktion. Es ist auch vorgesehen, daß eine am Einsteckschlitz S1 zugeführte Chipkarte weder zum Einsteckschlitz S1 zurücktransportiert wird, wenn z.B. die Karte nicht gelesen werden kann oder wenn die Karte ungültig ist. Analoges gilt für eine am Schlitz S2 zugeführte und dorthin wieder zurück transportierte Karte. Durch Sensoren, insbesondere Lichtschranken, im Bereich der Lesestation LS und der Transportkanäle TK1, TK2 kann festgestellt werden, wo sich die Chipkarte CK gerade befindet. Dies kann insbesondere dann notwendig sein, wenn fälschlich eine weitere Karte eingesteckt wird, wobei dann durch entsprechende Steuerung der Transportbänder die zweite Karte wieder herausbefördert werden kann.

Im Einschleuß- und/oder Ausschleuß-Transportkanal TK1, TK2 kann ferner noch ein Magnetlesekopf MLK vorgesehen werden, so daß gegebenenfalls auch Magnetstreifenkarten bzw. sowohl Chip als auch Magnetstreifen enthaltende Hybridkarten verwendet werden können.

## Ansprüche

1. Lesevorrichtung für Chipkarten mit einer wenigstens eine Einstecköffnung für die Karte aufweisenden sowie mit einem bidirektionalem Antrieb und einer Kontaktvorrichtung ausgestatteten Lesestation, **gekennzeichnet durch** die Kombination folgender Merkmale:

a) Vor der Einstecköffnung und an der der Einstecköffnung gegenüberliegenden, ebenfalls eine Öffnung aufweisenden Seite der Lesestation (LS) ist je ein Einschleuß- und/oder Ausschleuß-Transportkanal (TK1, TK2) vorgesehen,

b) die beiden Transportkanäle (TK1, TK2) weisen je einen, vom Antrieb der Lesestation (LS) unabhängigen bidirektionalen Antrieb auf,

c) innerhalb der Lesestation (LS) sind im Bereich der beiden Öffnungen jeweils steuerbare Sperrklinken (A1, A2) vorgesehen, die die jeweils von der gegenüberliegenden Öffnung zugeführte Chipkarte (CK) in der Lese-/Schreibposition fixieren.

2. Lesevorrichtung nach Anspruch 1, **dadurch gekennzeichnet,** daß die einzelnen Antriebe aus endlos umlaufenden, jeweils paarweise angeordneten und die dazwischenliegende Chipkarte (CK) mitziehenden Transportbändern (B1, B2, B3) bestehen.

3. Lesevorrichtung nach Anpruch 1 oder 2, **dadurch gekennzeichnet,** daß die Sperrklinken (A1, A2) durch Hubmagneten (M1, M2) gesteuert sind.

4. Lesevorrichtung nach einem der vorhergehenden Ansprüche, **dadurch gekennzeichnet,** daß in der Lesestation (LS) und in den Transportkanälen (TK1, TK2) jeweils den Transport der Chipkarte (CK) überwachende Lichtschranken vorgesehen sind.

5. Lesevorrichtung nach einem der vorhergehenden Ansprüche, **dadurch gekennzeichnet,** daß im Einschleuß- und/oder Ausschleuß-Transportkanal (TK1, TK2) ein Magnetlesekopf (MLK) angeordnet ist.